# EUROPÄISCHE PATENTSCHRIFT

(11) **EP 0 764 662 B1**
(45) Veröffentlichungstag und Bekanntmachung des Hinweises auf die Patenterteilung: **13.03.2002**
(21) Anmeldenummer: 96114353.4
(22) Anmeldetag: 07.09.1996
(51) Int. Cl.: C08F 8/14, C08F 8/30

(54) **Polymethacrylsäureester, deren Estergruppen in alpha- und omega-Stellung von den in der Kette befindlichen Estergruppen abweichen**
Polymethacrylic acid esters, containing in the alpha and omega position, ester groups which are different from those in the main chain
Polyester d'acide méthacrylique, renfermant, en position alpha et oméga des groupes d'ester différentes des groupes d'ester dans la chaîne

(30) Priorität: 21.09.1995 DE 19535077
(43) Veröffentlichungstag der Anmeldung: 26.03.1997
(73) Patentinhaber: Goldschmidt AG, 45127 Essen (DE)
(72) Erfinder: Fock, Jürgen, Dr., 40470 Düsseldorf (DE); Knebelkamp, Arno, Dr., 45131 Essen (DE)

(56) Entgegenhaltungen:
- EP-A- 0 386 507
- EP-A- 0 522 376
- EP-A- 0 613 910
- EP-A- 0 622 378
- EP-A- 0 665 240
- DE-A- 4 405 041

## Beschreibung

Die Erfindung betrifft neuartige Polymethacrylsäureester, deren Estergruppen in α- und ω-Stellung von den in der Kette befindlichen Estergruppen abweichen. Die Erfindung betrifft ferner ein Verfahren zur Herstellung dieser Verbindungen durch Umesterung.

Durch Umesterung von Polyacrylsäurealkylestern (Alkylreste mit 1 bis 4 Kohlenstoffatomen) mit speziellen Alkoholen, die meist funktionelle Gruppen aufweisen, erhältliche funktionalisierte Polyacrylsäureester sind in jüngster Zeit mehrfach beschrieben worden, wie z. B. in der DE-PS 38 42 201. Diese Umesterungsprodukte haben gegenüber den analogen Copolymerisaten wesentliche Vorteile, wie z. B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylsäureestern, deren alkoholische Esterkomponente olefinische Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Bei diesen Umesterungsverfahren verläuft die Umesterung meist bis zu Umesterungsgraden von etwa 70 %, wobei Produkte mit zumindest angenähert statistischer Verteilung der durch die Umesterung eingeführten Alkohole längs der Polymerenkette erhalten werden können.

Diese Umesterungsverfahren lassen sich nicht ohne weiteres mit den entsprechenden Polymethacrylsäurealkylestern durchführen.

Aus Chemical Abstracts 98 (No. 8, 54652f) ist es zwar bekannt, Polymethacrylsäureester mit einem großen Überschuß an Diethylaminoethanol bei Temperaturen von > 150 °C in Gegenwart von Titanaten als Katalysatoren umzusetzen. Hierbei werden Polymere erhalten, bei denen ein Teil der Estergruppen mit Diethylaminoethanol umgeestert worden ist. Bei dieser Temperatur werden aber verhältnismäßig uneinheitliche Produkte erhalten, wobei thermische Zersetzungsprodukte nicht vermieden werden können.

Gemäß DE-OS 43 06 537 ist es dagegen bei Einhaltung bestimmter Strukturparameter für die umzusetzenden Polymethacrylsäureester und geeigneter Auswahl der Verfahrensbedingungen bei der Umesterung möglich, eine oder beide endständig gebundenen Estergruppen umzuestern. Dies ermöglicht die Herstellung von Polymethacrylsäureestern, deren Estergruppen in α- und ω-Stellung von den in der Kette befindlichen Estergruppen abweichen.

Erhalten werden dabei Polymethacrylsäureester der allgemeinen Formel 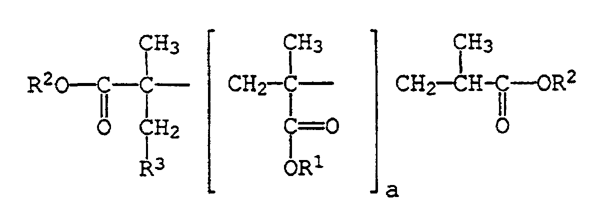 wobei die Reste
- R¹: gleich oder verschieden sind und Alkylreste mit 1 bis 8 Kohlenstoffatomen, Perfluoralkyl- oder Dialkylaminoalkylreste bedeuten und
- R²: die Bedeutung der Reste R¹ haben oder von einem Alkohol R²OH abgeleitete Reste sind,
- R³: der Rest eines an sich bekannten Mercaptan-Kettenreglers ist, wobei der Rest R³ frei von aktiven Wasserstoffatomen ist, und
- a: eine Zahl ist, die im Mittel ≥ 4 ist,
mit der Maßgabe, daß der Alkohol R²OH einen höheren Siedepunkt als der Alkohol R¹OH hat und im durchschnittlichen Molekül mindestens 1 Rest R² ungleich R¹ ist.

Bei der Herstellung dieser Verbindungen kann die Esterendgruppe in ω-Stellung, welche sich an dem einzigen tertiären Kohlenstoffatom der Kette befindet, aufgrund ihrer besonders hohen Reaktivität unter definierten Bedingungen (relativ niedrige Temperatur, ein Moläquivalent einer OH-funktionellen Komponente, Katalysator auf Basis von Titanaten, Zirkonaten oder Stannaten) mit hoher Selektivität und nahezu quantitativer Ausbeute umgeestert werden.

Die Esterendgruppe in α-Stellung, die sich in direkter Nachbarschaft zu dem vom Kettenregler stammenden Rest R³ und damit an einem quartären Kohlenstoffatom befindet, läßt sich nur erschwert umestern. Man benötigt in der Regel erheblich höhere Temperaturen (160 bis 170 °C) als für die alleinige Umesterung der Estergruppe in ω-Stellung; alle in der Kette befindlichen Estergruppen werden unter den genannten Bedingungen überhaupt nicht zur Reaktion gebracht.

Diese hohen Temperaturen führen darüber hinaus in Gegenwart typischer Umesterungskatalysatoren, wie beispielsweise Titan- und Zirkonverbindungen, oftmals zu unerwünschten Produktverfärbungen. Zudem können thermisch labile OH-funktionelle Verbindungen unter diesen drastischen Bedingungen nicht eingesetzt werden.

Als Ausgangsverbindungen werden gemäß DE-OS 43 06 537 Polymethacrylate eingesetzt, wie sie durch radikalische Polymerisation von Methacrylaten in Gegenwart von Mercaptanen als Kettenübertragungsreagentien erhalten werden.

Führt man die radikalische Polymerisation von Methacrylaten dagegen in Gegenwart von ester- oder carbonsäurefunktionellen Mercaptanen des Typs R*(H)OC(O)-(CH₂)ₙ-SH durch, erhält man Polymethacrylate der Formel 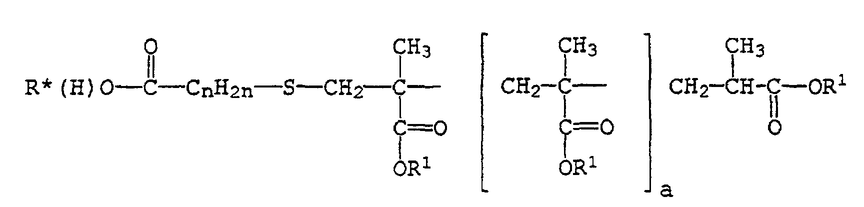 deren Ester- bzw. Säuregruppe in α-Stellung sich von der zuvor genannten Estergruppe in α-Stellung dahingehend unterscheidet, daß sie durch den Regler eingebracht wurde und mit einem sekundären, gegebenenfalls tertiären Kohlenstoffatom verknüpft ist (CₙH₂ₙ).

Es wurde nun gefunden, daß bei derartigen Polymethacrylaten beide Esterendgruppen in α- und ω-Stellung unter relativ milden Bedingungen quantitativ zu den erfindungsgemäßen Polymethacrylsäurestern der Formel I umgeestert werden können 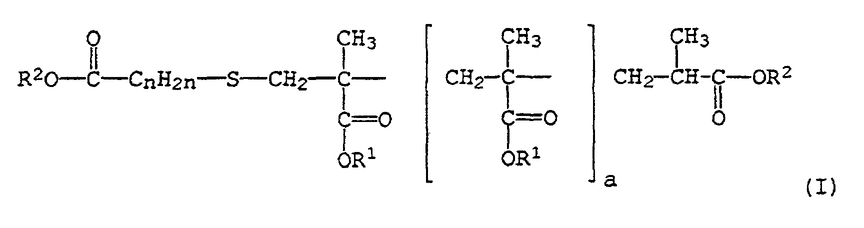 wobei die Reste
- R¹: gleich oder verschieden sind und Alklyreste mit 1 bis 8 Kohlenstoffatomen, Perfluoralkyl- oder Dialkylaminoalkylreste bedeuten,
- R²: von einem Alkohol R²OH abgeleitete Reste sind,
- n: eine Zahl von 1 bis 6 ist und
- a: eine Zahl ist, die im Mittel ≥ 4 ist,
mit der Maßgabe, daß der Alkohol R²OH einen um mindestens 10 °C höheren Siedepunkt als der Alkohol R¹OH hat.

Der Rest R¹ ist vorzugsweise ein Methyl-, Butyl-, n- oder i-Octylrest. Beispiele geeigneter Perfluoralkylreste sind der Trifluorethyl-, Pentafluorpropyl-, Nonafluorhexyl- und der Tridecafluoroctylrest.

R¹ kann auch die Bedeutung eines Dialkylaminoalkylrestes haben. Beispiele besonders geeigneter Dialkylaminoalkylreste sind die Dimethylaminoethyl- und Diethylaminoethylreste.

Der Rest R² ist von dem Alkohol R²OH abgeleitet, der in Hinblick auf die Umesterungsreaktion einen höheren Siedepunkt als der Alkohol R¹OH bzw. R*OH haben muß, wobei die Siedepunktdifferenz ≥ 10 °C ist.

R^{∗} ist, wie ausgeführt, abgeleitet von einem an sich bekannten Kettenregler des Typs R^{*}OC(O)-(CH₂)ₙ-SH, bei dem R* Alkyl- oder Alkarylreste mit 1 bis 16 Kohlenstoffatomen bedeutet.

a ist eine Zahl, die im Mittel ≥ 4 ist. Sie hat vorzugsweise einen Wert von 4 bis 500. Hieraus ergibt sich für die erfindungsgemäßen Polymeren ein Molgewichtsbereich (Mₙ) von etwa 400 bis 100 000.

In den folgenden Abschnitten sind bevorzugte Bedeutungen für die Reste R² angegeben.

So ist R² vorzugsweise ein Alkylrest mit einer größeren Anzahl Kohlenstoffatome als R¹ oder ein Alkenylrest.

Die Anzahl der Kohlenstoffatome kann bis zu 30 betragen. Dabei kann der Alkylrest gegebenenfalls inert, zum Beispiel durch Halogenreste, substituiert sein. R² kann auch ein Alkenylrest, vorzugsweise der Allyl-, Hexenyl- oder Oleylrest oder ein Rest der Formel 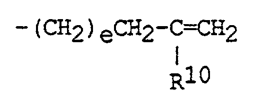 sein, wobei
- R¹⁰: ein Wasserstoff- oder Methylrest und
- e: eine Zahl von 0 bis 10 ist.

Weiter kann R² vorzugsweise ein -R⁴-OH-Rest sein, wobei R⁴ ein zweiwertiger aliphatischer Kohlenwasserstoffrest mit 2 bis 20 Kohlenstoffatomen ist. Beispiele solcher Reste -R⁴-OH sind -(CH₂)₂-OH, -(CH₂)₄-OH oder -(CH₂)₆-OH.

R² ist in einer weiteren bevorzugten Form ein -(CₙH₂ₙO)_{b}R⁵- Rest, wobei R⁵ ein Wasserstoff-, Alkyl-, Alkaryl-, Alkenyl- oder Sulfopropylrest, n eine Zahl von 2 bis 18 und b eine Zahl ≥ 1 ist. Beispiele für die Reste R⁵ sind Methyl-, Butyl-, Stearyl-, Allyl-, Hexenyl-, Nonylphenyl- oder Oleylreste.

Ist n = 2, enthält der Polyetherrest ausschließlich Oxyethyleneinheiten. Ist der Wert für n > 2, besteht der Polyetherrest aus Oxyethyleneinheiten und anteilig aus Oxyalkyleneinheiten, deren Kohlenstoffzahl zwischen 3 und 18 liegt. Dabei kann n den Wert einer gebrochenen Zahl zwischen 2 und 18 annehmen. Vorzugsweise besteht der Oxyalkylenblock aus Oxyethyleneinheiten, wobei gegebenenfalls zusätzlich zu den Oxypropylen- auch Oxybutyleneinheiten vorhanden sein können. Oxyalkyleneinheiten mit einer Kohlenstoffanzahl von 4 bis 18 sind dann bevorzugt, wenn hydrophobe Eigenschaften des Umesterungsproduktes angestrebt werden; ein Beispiel dafür ist der Oxytetramethylenrest.
- R²: kann in einer weiteren bevorzugten Form auch ein 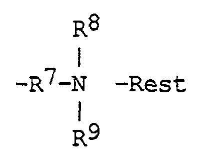 oder der Rest 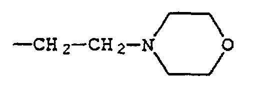 sein, wobei
- R⁷: ein zweiwertiger aliphatischer Kohlenwasserstoffrest mit 2 bis 6 Kohlenstoffatomen in der Kohlenstoffkette oder der Rest -(CₙH₂ₙO-)ₘCₚH₂ₚ- ist, und die Indices folgende Werte aufweisen: n = 2, 3 oder 4; m = 1 bis 20; p = 2, 3 oder 4.
- R⁸ und R⁹: sind gleich oder verschieden und bedeuten jeweils Alkylreste mit 1 bis 18 Kohlenstoffatomen.

Das Stickstoffatom kann in protonierter oder quaternierter Form vorliegen.

Beispiele derartiger Reste sind

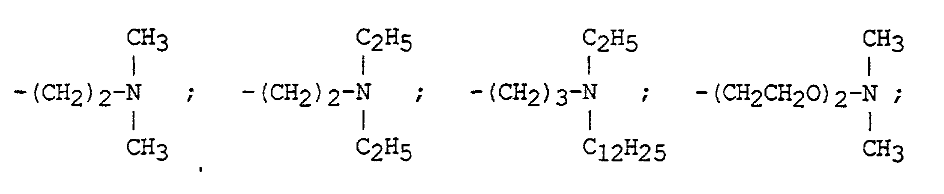

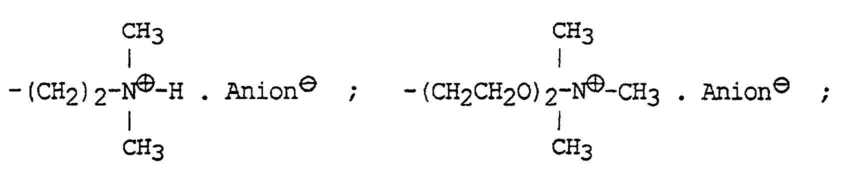

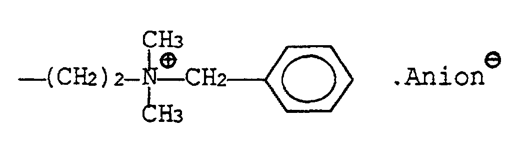

Der Rest R² kann auch die Bedeutung eines -(CH₂)_{c}C_{d}F_{2d+1}-Restes annehmen, wobei c eine Zahl von 2 bis 10 und d eine Zahl von 1 bis 12 ist. Bevorzugte Beispiele solcher Reste sind -(CH₂)₂-C₄F₉ oder -(CH₂)₂-C₈F₁₇.

Der Rest R² kann schließlich die Bedeutung des Restes 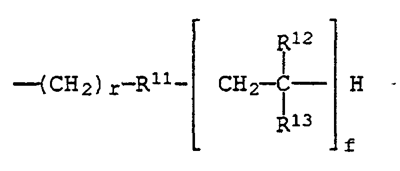 haben, wobei
- _{R}11: ein Sauerstoff- oder Schwefelrest,
- R¹²: ein Wasserstoff- oder Methylrest,
- R¹³: ein Phenyl-, 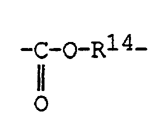 oder 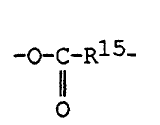 Rest ist, wobei
R¹⁴ ein Wasserstoff-, Alkyl-, Alkylfluoralkyl- oder ein Dialkylaminoalkylrest ist, wobei das Stickstoffatom in protonierter oder quaternierter Form vorliegen kann,
R¹⁵ ein Alkylrest ist,
- r: eine Zahl von 2 bis 6 und
- f: eine Zahl von 2 bis 100 ist.

Beispiele solcher Reste sind der ω-Hydroxypolystyrol-, ω-Hydroxypoly-n- oder -t-butylmethacrylat- und der ω-Hydroxypolyvinylpivalatrest. Aus dem ω-Hydroxypoly-t-butylmethacrylatrest läßt sich durch sauer katalysierte Abspaltung von Isobuten der Polymethacrylsäurerest erhalten.

Beispiele erfindungsgemäßer Polymethacrylsäureester sind:

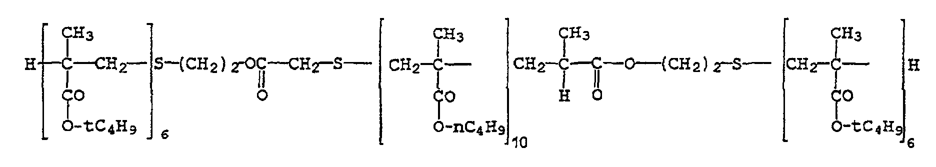

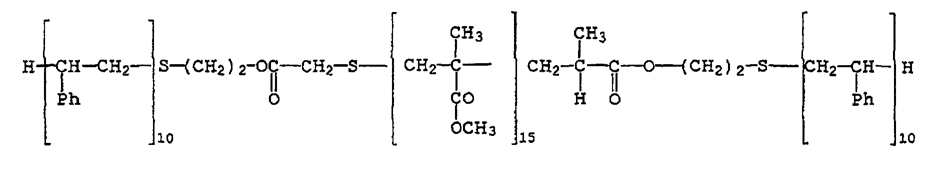

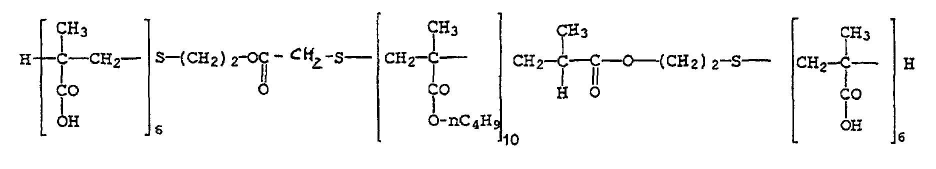

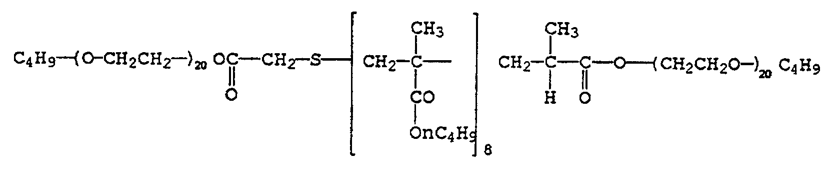

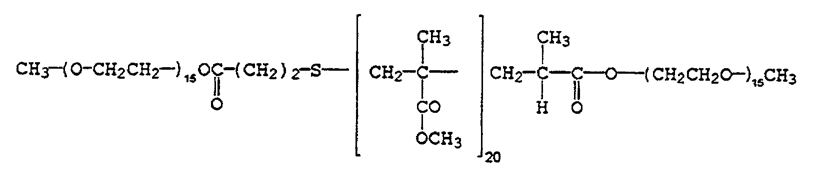

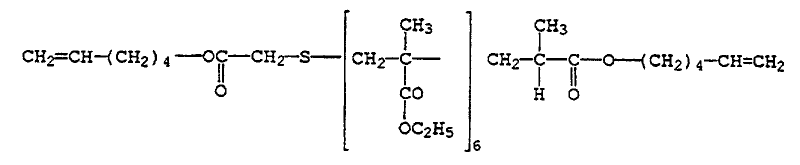

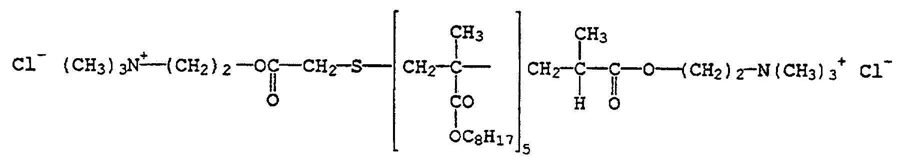

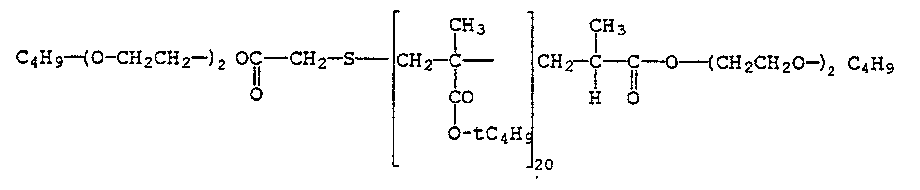

Dem Fachmann ist klar, daß die neuen Polymethacrylsäureester der allgemeinen Formel I Eigenschaften aufweisen, die anwendungstechnisch von großem Interesse sein können, indem zum Beispiel ihre Verträglichkeit mit anderen Medien in gewünschter Weise verändert werden kann. Dies gilt für die Hydrophobie, die Hydrophilie und die schmutzabweisenden Eigenschaften. Durch geeignete Wahl der zur Umesterung verwendeten Alkohole können antistatische Eigenschaften erzielt werden. Enthalten die zur Umesterung verwendeten Alkohole zusätzliche funktionelle und weiteren Reaktionen zugängliche Gruppen, wie etwa eine weitere OH- oder -CH=CH₂-Gruppe, besteht die Möglichkeit, die erfindungsgemäßen Produkte zu Blockpolymeren des Typs ABA bzw. (AB)ₙ oder in Kammpolymeren weiter umzusetzen. Hierdurch wird die Herstellung neuartiger Blockpolymerer ermöglicht.

Die Synthese von alternierenden Blockcopolymeren des Typs (AB)ₙ erfolgt durch Umesterung mit α,ω-dihydroxyfunktionellen Polymeren, wie z. B. Polyethylenglykol, Polypropylenglykol oder Polyoxytetramethylen in Molverhältnissen von 1 : 1 bis 1 : ≤ 2.

Ein weiterer Gegenstand der Erfindung ist ein Verfahren zur Herstellung der erfindungsgemäßen neuen Polymethacrylsäureester der Formel I. Das erfindungsgemäße Verfahren ist dadurch gekennzeichnet, daß man durch radikalische Polymerisation in Gegenwart von ester- oder carbonsäurefunktionellen Mercaptanen erhaltene Polymethacrylsäureester der allgemeinen Formel 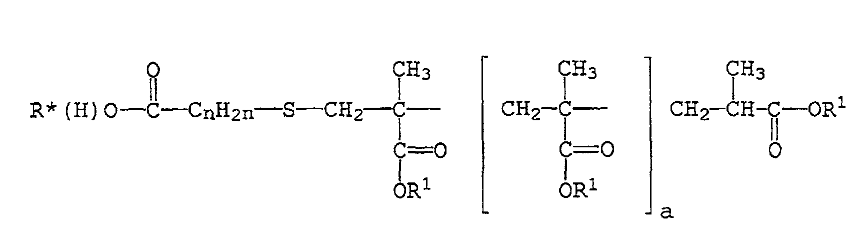 wobei
die Reste R¹ und der Index a die bereits angegebene Bedeutung haben, R* abgeleitet ist von einem an sich bekannten Kettenregler des Typs R^{*}OC(O)-(CH₂)ₙ-SH, bei dem R* Alkyl- oder Alkarylreste mit 1 bis 16 Kohlenstoffatomen bedeutet, mit Alkoholen der Formel R²OH bei Temperaturen von 100 bis 130 °C, gegebenenfalls in Gegenwart von Lösungsmitteln, unter Zusatz von an sich bekannten nichtbasischen Umesterungskatalysatoren in einem molaren Verhältnis von Polymethacrylsäureester : R²OH von 1 : 1 bis 1 : 5, vorzugsweise 1 : 1 bis 1 : 2 umestert, mit der Maßgabe, daß der Alkohol R²OH einen um mindestens 10 °C höheren Siedepunkt als der Alkohol R¹OH bzw. R*OH hat.

Es war überraschend, daß bei diesen Verfahrensbedingungen die Umesterung nur an beiden endständigen Methacrylsäureestergruppen stattfindet. Die in der Kette vorliegenden Methacrylsäureester werden nicht oder nur in ganz untergeordnetem, vernachlässigbarem Umfang umgeestert. Voraussetzung hierfür ist allerdings, daß keine Reaktionstemperaturen > 150 °C verwendet werden.

Bevorzugte Umesterungskatalysatoren sind Alkyltitanat, Alkylzirkonat, Dialkylzinnacetathalogenid oder Dialkylzinndialkylester, die in Mengen von 0,1 bis 2 Gew.-%, bezogen auf Polymethacrylsäureester, verwendet werden. Beispiele besonders geeigneter Katalysatoren sind Isopropyltitanat, n-Propylzirkonat, Dibutylzinnacetatchlorid, Dibutylzinndiacetat und Dibutylzinndilaurat.

Die Reaktionstemperatur beträgt 70 bis 150 °C, vorzugsweise 100 bis 130 °C.

Die Reaktion kann mit oder ohne Lösungsmittel durchgeführt werden. Im Falle der Verwendung eines Lösungsmittels bieten sich Toluol, Xylol oder Benzinfraktionen mit einem Siedebereich von 70 bis 140 °C an.

In den folgenden Beispielen wird die Herstellung der erfindungsgemäßen Verbindungen noch näher erläutert.

### Beispiel 1A

### Herstellung eines Polymethylmethacrylats durch radikalische Polymerisation in Gegenwart von Mercaptoessigsäuremethylester als Kettenüberträger (nicht erfindungsgemäß)

Eine Lösung von 7,0 g Azodiisobuttersäurenitril und 247,7 g (2,33 Mol) Mercaptoessigsäuremethylester in 483 g Toluol und 2086 g (20,83 Mol) Methylmethacrylat (MMA) wird innerhalb von 4 h in einen mit 150 g Toluol gefüllten Reaktor gegeben; das vorgelegte Lösungsmittel hat dabei eine Temperatur von etwa 100 °C und befindet sich unter einer Stickstoffatmosphäre. Anschließend werden nochmals 4,7 g Azodiisobuttersäurenitril, gelöst in 47 g Methylethylketon, innerhalb von 1 h in gleichen Teilen nachgegeben. Schließlich wird das Reaktionsgemisch noch für 1 h bei der gleichbleibenden Temperatur von 100 °c weiter erwärmt. Nach Beendigung der Reaktion werden die Lösungsmittel und das Restmonomere bei 80 °C/1 Torr abdestilliert; es verbleibt eine farblose, viskose Flüssigkeit.

Aus der gelpermeationschromatographischen Untersuchung (Eichung gegen PMMA-Standards) ergibt sich für das erhaltene Polymerisat ein numerisches Molekulargewicht Mₙ (GPC) von 900 und für das Gewichtsmittel des Molekulargewichtes M_{w} (GPC) 1800, der Uneinheitlichkeitsfaktor (PD) beträgt somit 2,00. Aus der dampfdruckosmometrischen Molekulargewichtsbestimmung erhält man einen Mₙ-Wert von 1050. Der Restmonomerengehalt beträgt < 0,1 %.

### Beispiele 2A bis 6A

### Herstellung von Polymethacrylaten mit unterschiedlichen Alkylgruppen und verschiedenen Molekulargewichten durch geregelte radikalische Polymerisation in Gegenwart von Mercaptoessigsäuremethylester (nicht erfindungsgemäß)

Es wird verfahren wie in Beispiel 1A mit der Ausnahme, daß die molaren Verhältnisse des entsprechenden Methacrylatmonomeren und Mercaptoessigsäuremethylester (Monomer/Regler), wie in Tabelle 1 angegeben, verändert werden.

Anstelle von Methylmethacrylat (MMA) wird in Beispiel 5A eine Mischung von Methylmethacrylat und n-Butylmethacrylat (BMA) in äquimolarem Verhältnis eingesetzt.

Anstelle von Mercaptoessigsäuremethylester (MEME) wird im Beispiel 6A Mercaptoessigsäureethylester (MEEE) als Kettenübertragungsagens (Regler) verwendet. Neben den gelpermeationschromatographisch ermittelten Molekulargewichten (Mₙ/GPC; Eichung gegen PMMA-Standards) sind in Tabelle 1 dampfdruckosmometrisch ermittelte Molekulargewichte (Mₙ/Osmo.) angegeben.

**Tabelle 1**

| Darstellung von Polymethacrylaten durch radikalische Polymerisation in Gegenwart von Mercaptoessigsäureestern als Kettenübertragungsagentien (Regler) | | | | | | |
|---|---|---|---|---|---|---|
| Beispiel | Monomer | Regler | Monomer/ Regler (Mol/Mol) | Mn(GPC) | PD (Mw/Mn) | Mn (Osmo.) |
| 1A | MMA | MEME | 9 | 950 | 2,00 | 1050 |
| 2A | MMA | MEME | 30 | 2950 | 1,88 | 3100 |
| 3A | BMA | MEME | 8 | 1020 | 1,84 | 1000 |
| 4A | CHMA | MEME | 7 | 1150 | 1,71 | 1350 |
| 5A | MMA/BMA | MEME | 8 | 980 | 1,64 | 1100 |
| 6A | MMA | MEEE | 8,8 | 1060 | 1,66 | 1010 |

### Beispiel 1B

### Herstellung eines α-Methyl-ω-hydroxypolyethylenoxids (nicht erfindungsgemäß)

64 g (2 Mol) Methanol und 23 g (0,33 Mol) Kaliummethylat werden in einen Reaktor gegeben. Nach sorgfältiger Spülung mit Reinstickstoff wird auf 110 °C erhitzt, und es werden 2360 g (ca. 54 Mol) Ethylenoxid so schnell zugegeben, daß die Reaktionsinnentemperatur 120 °C und der Druck 6 bar nicht überschreiten. Nach vollständiger Einleitung des Ethylenoxids wird die Temperatur so lange auf 115 °C gehalten, bis ein konstanter Manometerdruck das Ende der Nachreaktion anzeigt. Schließlich werden bei 80 bis 90 °C die nicht umgesetzten Monomeren im Vakuum entfernt.

Das erhaltene Produkt wird mit Hilfe von Phosphorsäure neutralisiert und das Wasser durch Destillation, das entstandene Kaliumphosphat durch Filtration zusammen mit einem Filterhilfsmittel entfernt. Das aus der Bestimmung der Hydroxylzahl

bei einer angenommenen Funktionalität von 1 ermittelte Molekulargewicht Mₙ (OH-Zahl) beträgt 1015.

### Beispiel 2B

### Herstellung eines α-Methyl-ω-hydroxypolyethylenoxids (nicht erfindungsgemäß)

Es wird verfahren wie in Beispiel 1B mit der Ausnahme, daß man das molare Verhältnis von Ethylenoxid zu Methanol von 27/1 (Beispiel 1B) auf 80/1 ändert. Die Katalysatorkonzentration beträgt 30 Mol-%, bezogen auf Methanol.

### Beispiel 3B

### Herstellung eines α-Methyl-ω-hydroxyethylenoxidpropylenoxid-Copolymeren (nicht erfindungsgemäß)

Es wird verfahren wie in Beispiel 1B mit dem Unterschied, daß 48 g (1,5 Mol) Methanol und 34 g (0,46 Mol) Kaliummethylat und, anstelle von Ethylenoxid, ein Gemisch aus 4196 g (95 Mol) Ethylenoxid und 739 g (12,7 Mol) Propylenoxid eingesetzt werden.

Das aus der Bestimmung der Hydroxylzahl bei einer angenommenen Funktionalität von 1 ermittelte Molekulargewicht Mₙ (OH-Zahl) beträgt 2940.

**Tabelle 2**

| Chemische Zusammensetzung und Molekulargewichte einiger ω-OH-funktioneller Polyalkylenoxide | | | |
|---|---|---|---|
| Polyether aus Beispiel | % EO | % PO | Mₙ (OH-Zahl) |
| 1B | 100 | - | 1015 |
| 2B | 100 | - | 2890 |
| 3B | 85 | 15 | 2945 |

### Beispiel 4B

### Herstellung eines ω-Hydroxypolystyrols (nicht erfindungsgemäß)

100 g Xylol werden unter einer Stickstoffatmosphäre in einem mit einem Rührer versehenen Reaktor auf 120 °C erhitzt. Dazu wird innerhalb von 4 h unter Beibehaltung der Temperatur von 120 °C ein Gemisch aus 1560 g (15 Mol) Styrol, 78,1 g (1 Mol) 2-Mercaptoethanol, 4,1 g Azodiisobuttersäuredinitril und 310 g getrocknetes Xylol zugegeben. Nach Beendigung der Zugabe erfolgt eine Nachreaktion für etwa 15 min, anschließend werden 0,16 g Methylhydrochinon zugesetzt. Durch Destillation im Vakuum (60 bis 80 °C/10 Torr) werden überschüssiges Styrol, 2-Mercaptoethanol und Xylol abgetrennt. Nach Auffüllen mit Xylol wird eine farblose, viskose Lösung des erhaltenen ω-Hydroxypolystyrols mit einer Gewichtskonzentration von etwa 62 % erhalten.

Aus der gelpermeationschromatographischen Untersuchung ergibt sich für das erhaltene Polymerisat ein numerisches Molekulargewicht Mₙ (GPC) von 870 und für das Gewichtsmittel des Molekulargewichtes M_{w} (GPC) 1380, der Uneinheitlichkeitsfaktor beträgt somit 1,59; aus dem Vergleich des aus der Hydroxylzahlbestimmung erhaltenen Molekulargewichtes (Mₙ/OH-Zahl) von 950 und dem dampfdruckosmometrisch ermittelten Molekulargewicht (Mₙ/Osmometrie) ergibt sich eine Hydroxyfunktionalität von 0,94. Der Restmonomerengehalt beträgt < 0,1 %.

### Beispiel 5B

### Herstellung eines monohydroxyfunktionellen Poly-t-butylmethacrylates durch geregelte radikalische Polymerisation (nicht erfindungsgemäß)

Eine Lösung von 1,47 g Azodiisobuttersäurenitril und 78,1 g (ca. 1 Mol) 2-Mercaptoethanol in 150 g Xylol und 1136,8 g (ca. 8 Mol) tert.-Butylmethacrylat (TBMA) wird innerhalb von 4 h in einen mit 150 g Xylol gefüllten Reaktor gegeben; das vorgelegte Lösungsmittel hat dabei eine Temperatur von etwa 120 °C und befindet sich unter einer Stickstoffatmosphäre. Nach Beendigung der Reaktion werden zunächst etwa 400 ppm Hydrochinonmonomethylether zugegeben und die Lösung auf etwa 40 °C abgekühlt, dann werden Lösungsmittel und das Restmonomere bei 110 °C/1 Torr abdestilliert; es verbleibt eine farblose, viskose Flüssigkeit.

Aus der gelpermeationschromatographischen Untersuchung ergibt sich für das erhaltene Polymerisat ein numerisches Molekulargewicht Mₙ (GPC) von 1300 und für das Gewichtsmittel des Molekulargewichtes M_{w} (GPC) 2170, der Uneinheitlichkeitsfaktor beträgt somit 1,67; aus dem Vergleich des aus der Hydroxylzahlbestimmung erhaltenen Molekulargewichtes (Mₙ/OH-Zahl) von 1150 und dem dampfdruckosmometrisch ermittelten Molekulargewicht (Mₙ/Osmometrie) ergibt sich eine Hydroxyfunktionalität von 1,04. Der Restmonomerengehalt beträgt < 0,1 %.

### Beispiel 1C

### Herstellung eines Polyethylenoxid-b-Polymethylmethacrylat-b-Polyethylenoxid-Copolymeren (erfindungsgemäß)

525 g (ca. 0,5 Mol) des Polymethylmethacrylates aus Beispiel 1A, 1065 g (ca. 1,05 Mol) des Polyethers aus Beispiel 1B und 131 g Toluol werden unter Stickstoff in einem Reaktor auf 125 °C erwärmt und dabei das Lösungsmittel unter gleichzeitiger Entfernung von Wasserspuren abdestilliert. Bei einer Temperatur von ca. 120 °C erfolgt die Zugabe von 4,77 g Isopropyltitanat und unmittelbar danach die Einstellung eines Vakuums von etwa 2 Torr. Das bei der Reaktion freiwerdende Methanol wird dabei, neben anderen flüchtigen Bestandteilen (Toluol, Isopropanol), kontinuierlich entfernt und kondensiert. Nach ca. 7 h ist die Reaktion beendet, die niedrige Rest-OH-Zahl der Reaktionsmischung (OH-Zahl: 1,9) sowie die quantitative gaschromatographische Untersuchung des Destillats (1,01 Mol Methanol) bestätigen den quantitativen Umsatz an beiden Esterendgruppen. Aus der gelpermeationschromatographischen Untersuchung ergibt sich für das erhaltene Polymerisat ein numerisches Molekulargewicht Mₙ (GPC) von 3500 und für das Gewichtsmittel des Molekulargewichtes M_{w} (GPC) 4300, der Uneinheitlichkeitsfaktor beträgt somit 1,23.

### Beispiel 2C

### Herstellung eines Polyethylenoxid-b-Polymethylmethacrylat-b-Polyethylenoxid-Copolymeren durch Umesterung in Gegenwart eines inerten Lösungsmittels (erfindungsgemäß)

Es wird prinzipiell verfahren wie in Beispiel 1C mit der Ausnahme, daß ein Reaktor mit einer aufgesetzten Fraktionierkolonne benutzt wird. Zu der Reaktionsmischung werden zusätzlich 900 g Toluol als inertes Lösungsmittel gegeben. Anschließend wird ein geringer Teil des Lösungsmittels unter Normaldruck solange abdestilliert, bis sichtbar keine Wasserspuren mehr vorhanden sind. Danach wird der Katalysator hinzugefügt und das freiwerdende Methanol durch Fraktionierung vom Toluol getrennt. Nach einer Reaktionszeit von 6 h beträgt die Kopftemperatur 110 °C; die Reaktion ist dann beendet. Die gaschromatographische Analyse des Destillats ergibt einen Umsatz von 97 %.

Das Ergebnis der gelpermeationschromatographischen Untersuchung liefert identische Mₙ- und M_{w}-Werte wie in Beispiel 1C.

### Beispiel 3C

### Herstellung eines Polyethylenoxid-b-Polymethylmethacrylat-b-Polyethylenoxid-Copolymeren durch Umesterung eines α-ethylesterfunktionellen Polymethylmethacrylates (erfindungsgemäß)

Es wird prinzipiell verfahren wie in Beispiel 2C mit der Ausnahme, daß das Polymethylmethacrylat aus Beispiel 6A, welches durch die Polymerisation von Methylmethacrylat in Gegenwart von Mercaptoessigsäureethylester als Kettenüberträger erhalten wurde, eingesetzt wird. So lassen sich die Umsätze in α-Position (Freisetzung von Ethanol) und ω-Position (Freisetzung von Methanol) als Funktion der Zeit verfolgen. Die Analyse des Destillats zu verschiedenen Zeitpunkten gibt nachfolgenden Reaktionsverlauf wieder:

| Zeit/h | Umsatz/% (Ethanol) | Umsatz/% (Methanol) |
|---|---|---|
| 1 | 97 | 32 |
| 2,5 | 7 | 28 |
| 7 | - | 42 |

Aus der gelpermeationschromatographischen Untersuchung ergibt sich für das erhaltene Polymerisat ein numerisches Molekulargewicht Mₙ (GPC) von 3350 und für das Gewichtsmittel des Molekulargewichtes M_{w} (GPC) 4200, der Uneinheitlichkeitsfaktor beträgt somit 1,25.

Identische Resultate werden erhalten, wenn die Umesterung lösungsmittelfrei durchgeführt wird.

### Beispiele 4C bis 10C

### Herstellung von Polyalkylenoxid-b-Polymethacrylat-b-Polyalkylenoxid-Copolymeren (erfindungsgemäß)

Es wird grundsätzlich verfahren wie in Beispiel 1C bzw. 2C beschrieben mit dem Unterschied, daß, wie in Tabelle 3 angegeben, Polymethacrylate unterschiedlicher chemischer Struktur und verschiedener Molekulargewichte mit Polyalkylenoxid-Homo- und -copolymeren verschiedener Molekulargewichte bzw. anderen ω-monohydroxyfunktionellen Verbindungen zur Reaktion gebracht werden.

**Tabelle 3**

| Darstellung von Polymethacrylat (B) -ABA-Triblockcopolymeren | | | | | | |
|---|---|---|---|---|---|---|
| Beispiel | OH-funkt. Verbdg.(A) aus Beispiel | Polymethacrylat (B) aus Beispiel | Umsatz/ OH-Zahl | Umsatz/GC (Methanol o. Butanol) | Mₙ/GPC (PMMA)/PD¹ | Mₙ/ Osmom. |
| 1C | 1B | 1A | 100 | 101 | 3500/1,22 | 2700 |
| 2C | 1B | 1A | 98 | 97 | 3450/1,24 | 2750 |
| 3C | 1B | 6A | 98 | 103 | 3500/1,22 | 2900 |
| 4C | 2B | 1A | 94 | 98 | 9700/1,19 | 6750 |
| 5C | 3B | 1A | 92 | 96 | 9850/1,21 | 6900 |
| 6C | 1B | 2A | 94 | 96 | 5200/1,44 | 5000 |
| 7C | 1B | 4A | 96 | 101 | 3800/1,21 | 3250 |
| 8C | 1B | 5A | 93 | 94 | 3500/1,18 | 3000 |
| 9C | 4B | 1A | 94 | 92 | 3250/1,49 | 2850 |
| 10C | 4B | 3A | 90 | 91 | 3650/1,52 | 2700 |

| | | | | | | |
|---|---|---|---|---|---|---|
| ¹ PD = Polydispersität = M_{w}/Mₙ | | | | | | |

### Beispiel 10C

### Herstellung eines Polymethacrylsäure-b-Polymethylmethacrylat-b-Polymethacrylsäure-Copolymeren (erfindungsgemäß)

525 g (ca. 0,5 Mol) des Polymethylmethacrylates aus Beispiel 1A und 1210 g (ca. 1,05 Mol) des hydroxyfunktionellen Poly-t-butylmethacrylates aus Beispiel 5B, gelöst in 1150 g Toluol, werden unter Stickstoff in einem Reaktor auf 115 °C erwärmt und dabei zunächst etwa 100 ml des vorliegenden Toluols unter gleichzeitiger Entfernung von Wasserspuren abdestilliert. Bei einer Temperatur von ca. 110 °C erfolgt die Zugabe von 8,68 g Isopropyltitanat. Das bei der einsetzenden Reaktion freiwerdende Methanol wird dabei, neben anderen flüchtigen Bestandteilen (Toluol, Isopropanol), kontinuierlich entfernt und kondensiert. Nach ca. 4 h werden nochmals 4,34 g Isopropyltitanat zugesetzt, Methanol entfernt und die Reaktion nach weiteren 3 h beendet. Die Hydroxylzahl des erhaltenen Produktes beträgt 4,1, was einem Umsatz von 92 % % (bezogen auf die im Unterschuß eingesetzte Komponente) entspricht. Aus der gelpermeationschromatographischen Untersuchung ergibt sich für das erhaltene Polymerisat ein numerisches Molekulargewicht Mₙ (GPC) von 3900 und für das Gewichtsmittel des Molekulargewichtes M_{w} (GPC) 5600, der Uneinheitlichkeitsfaktor beträgt somit 1,43.

Aus 250 g des so erhaltenen Produktes in toluolischer Lösung wird das Lösungsmittel durch Destillation entfernt und durch 150 g Dioxan ersetzt. Zu dieser Lösung gibt man 3,75 g p-Toluolsulfonsäuremonohydrat und erwärmt auf etwa 95 bis 100 °C. Die beginnende Abspaltung des Isobutens läßt sich an einer deutlichen Gasentwicklung erkennen. Nach einer Reaktionszeit von etwa 5 h ist die Gasentwicklung beendet. Die Säurezahl des erhaltenen Produktes in der Lösung beträgt 390, was einem Umsatz von 95 % entspricht.

NMR-spektroskopisch (Vergleich der Signalintensitäten der charakteristischen t-Butylgruppe) ergibt sich ebenfalls ein Umsatz von 95 %.

### Beispiel 11C

### Herstellung eines Polymethylmethacrylates mit zwei terminalen Stearylgruppen (erfindungsgemäß)

1050 g (1,0 Mol) des Polymethylmethacrylats aus Beispiel 1A, 554 g (2,05 Mol) Stearylalkohol und etwa 250 g Toluol werden unter Reinstickstoff in einem Reaktor auf 115 °C erhitzt, wobei das Lösungsmittel unter gleichzeitiger Entfernung von Feuchtigkeitsspuren abdestilliert wird. Anschließend werden 5 g Isopropyltitanat hinzugegeben und nach kräftiger Durchmischung ein Vakuum von 5 Torr eingestellt. Das freiwerdende Methanol wird zusammen mit evtl. vorhandenen Lösungsmittelresten in einer Kühlfalle kondensiert.

Nach etwa 5 h ist die Bildung von Methanol und damit die Reaktion beendet. Die gaschromatographische Bestimmung des Destillats ergibt einen Umsatz von 99 %; durch die Bestimmung der Hydroxylzahl errechnet sich ein Umsatz von 95 %.

### Beispiel 12C

### Herstellung eines Poly-n-butylmethacrylates mit zwei terminalen Diethylaminomethylgruppen und deren protonierte bzw. quaternierte Derivate (erfindungsgemäß)

1000 g (1,0 Mol) des Poly-n-butylmethacrylats aus Beispiel 3A, 234 g (2,0 Mol) Diethylaminoethanol und etwa 500 g Xylol werden unter Reinstickstoff in einem Reaktor mit aufgesetztem Rückflußkühler auf 140 °C erhitzt, wobei das Lösungsmittel solange unter Normaldruck abdestilliert wird, bis sichtbar keine Feuchtigkeitsspuren mehr vorhanden sind. Anschließend werden bei etwa 130 °C 3,7 g Isopropyltitanat hinzugegeben und verrührt. Das freiwerdende Butanol wird durch Fraktionierung von nicht umgesetztem Diethylaminoethanol getrennt und entfernt. Nach 4 h beträgt die Kopftemperatur 135 °C, die Reaktion ist beendet. Über die gaschromatographische Analyse des Destillats ermittelt sich der Umsatz zu 96 %.

Aus der Ermittlung der Hydroxylzahl ergibt sich ein Umsatz von 95 %. Die erhaltene Lösung des Produktes weist eine gelb-braune Farbe auf.

Aus 250 g (0,2 Mol) des so erhaltenen Produktes in xylolischer Lösung wird das Lösungsmittel durch Destillation entfernt und durch 250 g n-Propanol ersetzt. Unter Rühren gibt man bei Raumtemperatur über einen Zeitraum von 1 h insgesamt 24,0 g Eisessig (0,4 Mol) hinzu und rührt für eine weitere Stunde.

Der pH-Wert einer 10 %igen wäßrigen Lösung des protonierten Materials beträgt 7,1.

Zur Quaternisierung werden zunächst 250 g des in Propanol gelösten Produktes in einem Druckreaktor auf 120 °C erhitzt. Daraufhin wird soviel Methylchlorid eingeleitet, daß ein Druck von 4 bar entsteht. Dieser wird bei 120 °C über einen Zeitraum von 4 h aufrechterhalten. Nach anschließender Abkühlung auf Raumtemperatur und Entfernung des überschüssigen Methylchlorids wird ein gelbliches Produkt erhalten. Aus der Bestimmung des Chloridgehaltes und der Aminzahl ergibt sich ein Umsatz von 93 bzw. 97 % der Theorie.

### Beispiel 13C

### Herstellung eines Polytetrahydrofuran-(A)-b-Polymethylmethacrylat-(B)-Multiblock-(AB)n-Copolymeren (erfindungsgemäß)

525 g (ca. 0,5 Mol) des Polymethylmethacrylates aus Beispiel 1A, 400 g (ca. 0,4 Mol) eines Polytetramethylenetherglykols (Mₙ ca. 1000) und 131 g Toluol werden unter Stickstoff in einem Reaktor auf 125 °C erwärmt und dabei das Lösungsmittel unter gleichzeitiger Entfernung von Wasserspuren abdestilliert. Bei einer Temperatur von ca. 120 °C erfolgt die Zugabe von 4,77 g Isopropyltitanat und unmittelbar danach die Einstellung eines Vakuums von etwa 2 Torr. Das bei der Reaktion freiwerdende Methanol wird dabei, neben anderen flüchtigen Bestandteilen (Toluol, Isopropanol), kontinuierlich entfernt und kondensiert. Nach ca. 7 h ist die Reaktion beendet, die Hydroxylzahl der Reaktionsmischung beträgt nur noch 3,5. Die gaschromatographische Untersuchung des Destillats (0,78 Mol Methanol) bestätigt den nahezu quantitativen Umsatz des eingesetzten Polytetramethylenetherglykols. Aus der gelpermeationschromatographischen Untersuchung ergibt sich für das erhaltene Polymerisat ein numerisches Molekulargewicht Mₙ (GPC) von 8200 und für das Gewichtsmittel des Molekulargewichtes M_{w} (GPC) 13 600, der Uneinheitlichkeitsfaktor beträgt somit 1,66. Das feste Endprodukt ist gelb gefärbt.

## Patentansprüche

1. Polymethacrylsäureester der allgemeinen Formel 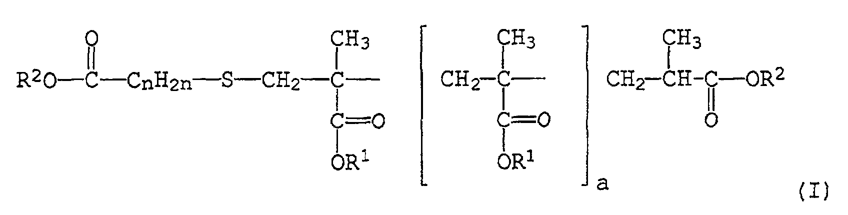 wobei die Reste
R¹ gleich oder verschieden sind und Alkylreste mit 1 bis 8 Kohlenstoffatomen, Perfluoralkyl- oder Dialkylaminoalkylreste bedeuten und
R² von einem Alkohol R²OH abgeleitete Reste sind,
n eine Zahl von 1 bis 6 ist und
a eine Zahl ist, die im Mittel ≥ 4 ist,
mit der Maßgabe, daß der Alkohol R²OH einen um mindestens 10 °C höheren Siedepunkt als der Alkohol R¹OH hat.

2. Polymethacrylsäureester nach Anspruch 1, **dadurch gekennzeichnet, daß** R² ein Alkylrest mit einer größeren Anzahl Kohlenstoffatome als der Rest R¹ oder ein Alkenylrest ist.

3. Polymethacrylsäureester nach Anspruch 2, **dadurch gekennzeichnet, daß** der Alkenylrest ein Rest der Formel 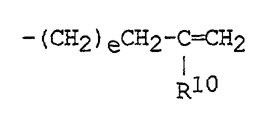 ist, wobei
R¹⁰ ein Wasserstoff- oder Methylrest und
e eine Zahl von 0 bis 10 ist.

4. Polymethacrylsäureester nach Anspruch 1, **dadurch gekennzeichnet, daß** der Rest R² ein -R⁴-OH-Rest ist, wobei R⁴ ein zweiwertiger aliphatischer Kohlenwasserstoffrest mit 2 bis 20 Kohlenstoffatomen ist.

5. Polymethacrylsäureester nach Anspruch 1, **dadurch gekennzeichnet, daß** der Rest R² ein -(CₙH₂ₙO-)_{b}R⁵-Rest ist, wobei R⁵ ein Wasserstoff-, Alkyl-, Alkaryl-, Alkenyl- oder Sulfopropylrest, n eine Zahl von 2 bis 18 und b eine Zahl > 1 ist.

6. Polymethacrylsäureester nach Anspruch 1, **dadurch gekennzeichnet, daß** der Rest R² ein 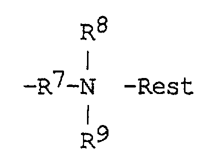 oder der Rest 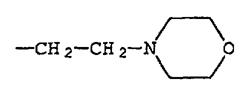 ist, wobei
R⁷ ein zweiwertiger aliphatischer Kohlenwasserstoffrest mit 2 bis 4 Kohlenstoffatomen in der Kohlenstoffkette oder der Rest -(CₙH₂ₙO-)ₘCₚH₂ₚ- (n = 2, 3 oder 4; m = 1 bis 20; p = 2, 3 oder 4) ist,
R⁸ und R⁹ gleich oder verschieden und jeweils Alkylreste mit 1 bis 18 Kohlenstoffatomen sind, wobei das Stickstoffatom in protonierter oder quaternierter Form vorliegen kann.

7. Polymethacrylsäureester nach Anspruch 1, **dadurch gekennzeichnet, daß** der Rest R² ein -(CH₂)_{c}C_{d}F_{2d+1}-Rest ist, wobei c eine Zahl von 2 bis 10 und d eine Zahl von 1 bis 12 ist.

8. Polymethacrylsäureester nach Anspruch 1, **dadurch gekennzeichnet, daß** der Rest R² ein 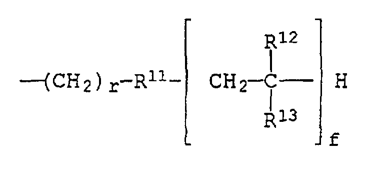 Rest ist, wobei
R¹¹ ein Sauerstoff- oder Schwefelrest,
R¹² ein Wasserstoff- oder Methylrest,
R¹³ ein Phenyl-, 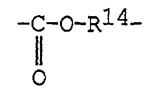 oder 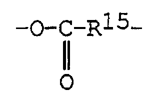 Rest ist, wobei
R¹⁴ ein Wasserstoff-, Alkyl-, Alkylfluoralkyl- oder ein Dialkylaminoalkylrest ist, wobei das Stickstoffatom in protonierter oder quaternierter Form vorliegen kann,
R¹⁵ ein Alkylrest ist,
r eine Zahl von 2 bis 6 und
f eine Zahl von 2 bis 100 ist.

9. Verfahren zur Herstellung der Polyacrylsäureester nach einem oder mehreren der vorhergehenden Ansprüche, **dadurch gekennzeichnet, daß** man Polymethacrylsäureester der allgemeinen Formel 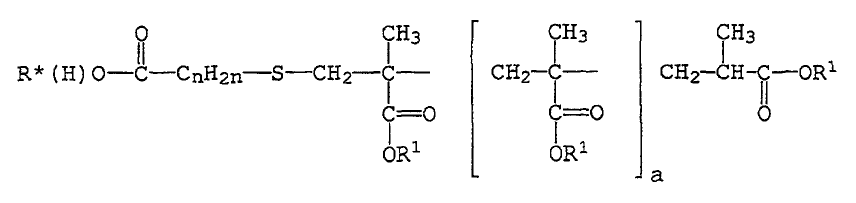 wobei die Reste R¹ und der Index a die bereits angegebene Bedeutung haben,
R* abgeleitet ist von einem an sich bekannten Kettenregler des Typs R*OC(O)-(CH₂)ₙ-SH, bei dem R* Alkyl- oder Alkarylreste mit 1 bis 16 Kohlenstoffatomen bedeutet,
mit Alkoholen der Formel R²OH bei Temperaturen von 70 bis 150 °C, gegebenenfalls in Gegenwart von Lösungsmitteln, unter Zusatz von an sich bekannten nichtbasischen Umesterungskatalysatoren in einem molaren Verhältnis von Polymethacrylsäureester zu Alkohol von 1 : 1 bis 1 : 5 umestert, mit der Maßgabe, daß der Alkohol R²OH einen um mindestens 10 °C höheren Siedepunkt als der Alkohol R¹OH bzw. R*OH hat.

10. Verfahren nach Anspruch 9, **dadurch gekennzeichnet, daß** man die Umesterung in einem molaren Verhältnis von 1 : 1 bis 1 : 2 durchführt.

11. Verfahren nach Anspruch 9 und 10, **dadurch gekennzeichnet, daß** man als Umesterungskatalysatoren Alkyltitanat, Alkylzirkonat, Dialkylzinnacetathalogenid oder Dialkylzinndialkylester verwendet.

## Claims

1. Polymethacrylic esters of the general formula 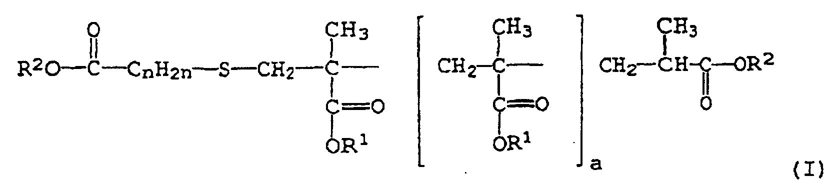 where each
R¹, which may be the same or different, represents an alkyl radical having 1 to 8 carbon atoms, a perfluoroalkyl radical or a dialkylaminoalkyl radical,
R² represents radicals derived from an alcohol R²OH,
n is from 1 to 6 and
a is on average ≥ 4,
with the proviso that the R²OH alcohol has an at least 10°C higher boiling point than the R¹OH alcohol.

2. Polymethacrylic esters according to claim 1, **characterized in that** R² represents an alkyl radical having a larger number of carbon atoms than the R¹ radical or represents an alkenyl radical.

3. Polymethacrylic esters according to claim 2, **characterized in that** the alkenyl radical is a radical of the formula 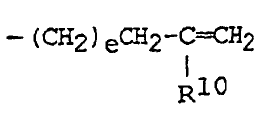 where
R¹⁰ is a hydrogen or methyl radical and
e is from 0 to 10.

4. Polymethacrylic esters according to claim 1, **characterized in that** R² is an -R⁴-OH radical, where R⁴ is a divalent aliphatic hydrocarbon radical having 2 to 20 carbon atoms.

5. Polymethacrylic esters according to claim 1, **characterized in that** R² is a -(CₙH₂ₙO-)_{b}R⁵- radical, where R⁵ is a hydrogen, alkyl, alkaryl, alkenyl or sulfopropyl radical, n is from 2 to 18 and b is > 1.

6. Polymethacrylic esters according to claim 1, **characterized in that** R² is an 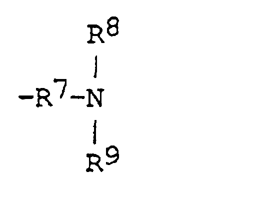 radical or the radical 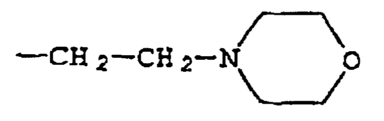 where
R⁷ is a divalent aliphatic hydrocarbon radical having 2 to 4 carbon atoms in the carbon chain or the radical -(CₙH₂ₙO-)ₘCₚH₂ₚ- (n = 2, 3, or 4; m = 1 to 20; p = 2, 3 or 4),
R⁸ and R⁹ are identical or different and each represent alkyl radicals having 1 to 18 carbon atoms, and the nitrogen atom may be present in protonated or quaternized form.

7. Polymethacrylic esters according to claim 1, **characterized in that** R² is a -(CH₂)_{c}C_{d}F_{2d+1} radical, where c is from 2 to 10 and d is from 1 to 12.

8. Polymethacrylic esters according to claim 1, **characterized in that** R² is a 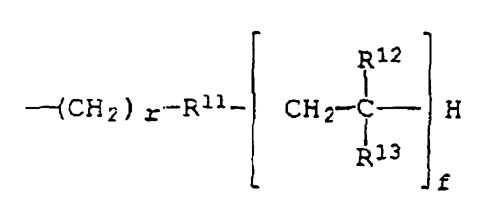 radical where
R¹¹ is an oxygen or sulfur radical,
R¹² is a hydrogen or methyl radical,
R¹³ is a phenyl, 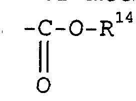 or 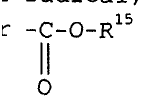 radical, where
R¹⁴ is a hydrogen, alkyl, alkylfluoroalkyl or dialkylaminoalkyl radical, in which case the nitrogen atom may be present in protonated or quaternized form,
R¹⁵ is an alkyl radical,
r is from 2 to 6 and
f is from 2 to 100.

9. Process for preparing the polyacrylic esters according to one or more of the preceding claims,
**characterized in that** polymethacrylic esters of the general formula 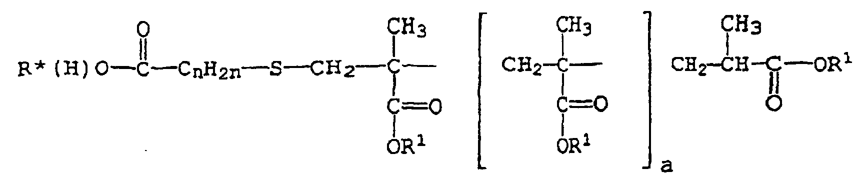 where
R¹ and the index a are each as defined above and
R^{*} is derived from a conventional chain regulator of the type R^{*}OC(O)-(CH₂)ₙ-SH, where R^{*} represents alkyl or alkaryl radicals having 1 to 16 carbon atoms,
are transesterified with alcohols of the formula R²OH at temperatures of 70 to 150°C, optionally in the presence of solvents, by addition of conventional non-basic transesterification catalysts in a molar ratio of polymethacrylic ester to alcohol in the range of from 1 : 1 to 1 : 5, with the proviso that the R²OH alcohol has an at least 10°C higher boiling point than the R¹OH or R*OH alcohol.

10. Process according to claim 9, **characterized in that** the transesterification is carried out in a molar ratio in the range from 1 : 1 to 1 : 2.

11. Process according to claim 9 and 10, **characterized in that** the transesterification catalysts used are alkyl titanate, alkyl zirconate, dialkyltin acetate halide or dialkyltin dialkyl esters.

## Revendications

1. Poly(esters de l'acide méthacrylique) de formule générale 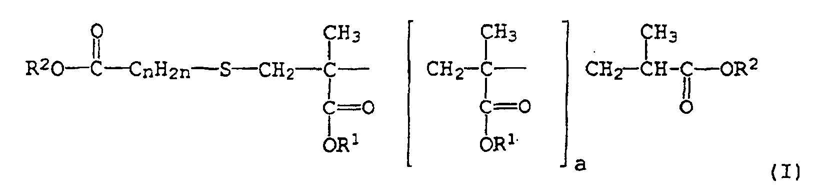 les radicaux
R¹ étant identiques ou différents et signifiant des radicaux alkyle comprenant 1 à 8 atomes de carbone, des radicaux perfluoroalkyle ou dialkylaminoalkyle et
R² étant des radicaux dérivés d'un alcool R²OH,
n étant un nombre de 1 à 6 et
a étant un nombre qui est en moyenne ≥ 4,
à condition que l'alcool R²OH présente un point d'ébullition au moins supérieur de 10°C à l'alcool R¹OH.

2. Poly(esters de l'acide méthacrylique) selon la revendication 1, **caractérisé en ce que** R² est un radical alkyle présentant un nombre d'atomes de carbone supérieur au radical R¹ ou est un radical alcényle.

3. Poly(esters de l'acide méthacrylique) selon la revendication 2, **caractérisé en ce que** le radical alcényle est un radical de formule 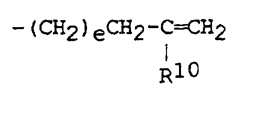
R¹⁰ étant un radical hydrogène ou méthyle et
e étant un nombre de 0 à 10.

4. Poly(esters de l'acide méthacrylique) selon la revendication 1, **caractérisé en ce que** le radical R² est un radical -R⁴-OH, R⁴ étant un radical hydrocarboné aliphatique divalent comprenant 2 à 20 atomes de carbone.

5. Poly(esters de l'acide méthacrylique) selon la revendication 1, **caractérisé en ce que** le radical R² est un radical -(CₙH₂ₙO-)_{b}R⁵, R⁵ étant un radical hydrogène, alkyle, alkaryle, alcényle ou sulfopropyle, n un nombre de 2 à 18 et b un nombre > 1.

6. Poly(esters de l'acide méthacrylique) selon la revendication 1, **caractérisé en ce que** le radical R² est un radical 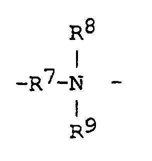 ou le radical 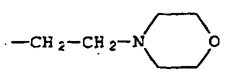
R⁷ étant un radical hydrocarboné aliphatique divalent comprenant 2 à 4 atomes de carbone dans la chaîne carbonée ou le radical -(CₙH₂ₙO)ₘCₚH₂ₚ- (n = 2, 3 ou 4 ; m = 1 à 20 ; p = 2, 3 ou 4),
R⁸ et R⁹ étant identiques ou différents et représentant à chaque fois des radicaux alkyle comprenant 1 à 18 atomes de carbone, l'atome d'azote pouvant se trouver sous forme protonique ou quaternisée.

7. Poly(esters de l'acide méthacrylique) selon la revendication 1, **caractérisé en ce que** le radical R² est un radical -(CH₂)_{c}C_{d}F_{2d+1}, c étant un nombre de 2 à 10 et d un nombre de 1 à 12.

8. Poly(esters de l'acide méthacrylique) selon la revendication 1, **caractérisé en ce que** le radical R² est un radical 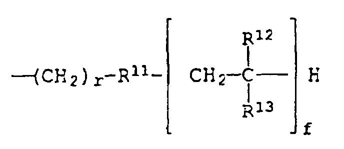
R¹¹ étant un radical oxygène ou soufre,
R¹² étant un radical hydrogène ou méthyle,
R¹³ étant un radical phényle, 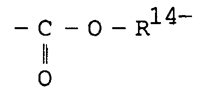 ou 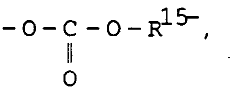
R¹⁴ étant un radical hydrogène, alkyle, alkylfluoroalkyle ou dialkylaminoalkyle, l'atome d'azote pouvant se trouver sous forme protonique ou quaternisée,
R¹⁵ étant un radical alkyle,
r étant un nombre de 2 à 6 et
f étant un nombre de 2 à 100.

9. Procédé pour la préparation de poly(esters de l'acide méthacrylique) selon l'une quelconque ou plusieurs des revendications précédentes, **caractérisé en ce qu'**on transestérifie des poly(esters de l'acide méthacrylique) de formule générale 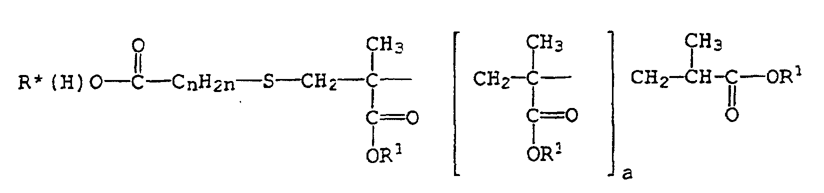 les radicaux R¹ et l'indice a ayant la signification déjà mentionnée
R^{*} étant dérivé d'un régulateur de chaîne connu en soi du type R^{*}OC(O)-(CH₂)ₙ-SH, où R^{*} signifie des radicaux alkyle ou alkaryle comprenant 1 à 16 atomes de carbone, avec des alcools de formule R²OH à des températures de 70 à 150°C, le cas échéant en présence de solvants, avec addition de catalyseurs de transestérification non basiques connus en soi, dans un rapport molaire poly(esters de l'acide méthacrylique) à alcool de 1:1 à 1:5, à condition que l'alcool R²OH présente un point d'ébullition supérieur d'au moins 10°C à l'alcool R¹OH ou, selon le cas R*OH.

10. Procédé selon la revendication 9, **caractérisé en ce qu'**on réalise la transestérification dans un rapport molaire de 1:1 à 1:2.

11. Procédé selon les revendications 9 et 10, **caractérisé en ce qu'**on utilise comme catalyseurs de transestérification du titanate d'alkyle, du zirconate d'alkyle, de l'halogénure d'acétate de dialkylétain ou de l'ester dialkylique de dialkylétain.
